# EUROPÄISCHE PATENTSCHRIFT

(11) **EP 1 565 325 B1**
(45) Veröffentlichungstag und Bekanntmachung des Hinweises auf die Patenterteilung: **11.08.2010**
(21) Anmeldenummer: 03796016.8
(22) Anmeldetag: 13.11.2003
(51) Int. Cl.: B42F 15/00

(54) **AUFHÄNGVORRICHTUNG**
SUSPENDING DEVICE
DISPOSITIF DE SUSPENSION

(30) Priorität: 27.11.2002 DE 20218442 U
(43) Veröffentlichungstag der Anmeldung: 24.08.2005
(73) Patentinhaber: Conteyor Multibag Systems N.V., 9820 Merelbeke (BE)
(72) Erfinder: CAMPS, Werner, B-2018 Antwerpen (BE)
(74) Vertreter: Weber, Roland
(86) Internationale Anmeldenummer: PCT/EP2003/050825
(87) Internationale Veröffentlichungsnummer: WO 2004/048121

(56) Entgegenhaltungen:
- US-A- 4 105 268

## Beschreibung

Die vorliegende Erfindung betrifft eine Aufhängvorrichtung für Bahnen aus flexiblem Material, bestehend aus einem Befestigungsabschnitt, welcher eine Befestigung der Aufhängvorrichtung an oder in der Nähe einer Kante eines ebenen Bahnmaterials ermöglicht, und einem Aufhängabschnitt, der die Aufhängung an einem Profilstab ermöglicht. In entsprechender Weise betrifft die vorliegende Erfindung auch Materialbahnen, die mit entsprechenden Aufhängvorrichtungen ausgestattet sind.

Konkret werden solche Aufhängvorrichtungen für Materialbahnen z.B. bei Transport- und Lagervorrichtungen verwendet, bei welchen die Materialbahnen Aufnahmetaschen oder Aufnahmeabteile oder aber Teile von solchen Taschen und Abteilen bilden. Benachbarte Materialbahnen können dabei über eine zusätzliche, dazwischen angebrachte Materialbahn zusammenhängen oder sie können auch einstückig miteinander zusammenhängen und U-förmige Taschen bilden. Zwischen diese Materialbahnen und in die dazwischen gegebenenfalls ausgebildeten Taschen können empfindliche Gegenstände eingelegt werden, wobei in einer typischen Transport- oder Lagervorrichtung eine Mehrzahl entsprechender Fächer und Taschen gebildet wird, in denen eine entsprechende Mehrzahl von Gegenständen aufgenommen werden kann, die durch die Materialbahnen voneinander getrennt und so gegen Beschädigung und Zerkratzen geschützt werden. Insbesondere werden solche Transport- und Lagerungsvorrichtungen für Karosserieteile und Innenausbautelle von Kraftfahrzeugen verwendet.

Entsprechende Materialbahnen oder Taschen sind in der Regel in einem größeren Rahmen oder Gestell aufgehängt. Um diese Bahnen aufhängen zu können, sind ihre Kanten oder Enden oftmals mit Schlaufen versehen, die auf entsprechende Stangen oder Rohre aufgeschoben werden. Dabei werden oft eine Vielzahl gleichartiger Materialbahnen oder Taschen mit ihren Ösen auf entsprechende Rohre aufgeschoben, um in einem Gestell aufgehängt werden zu können. Wenn eine dieser Taschen beschädigt wird und ausgetauscht werden soll, müssen jedoch auch alle anderen davor- oder dahinterliegenden Taschen aus der Aufhängeinrichtung gelöst werden, bevor eine neue Tasche an der Stelle der alten eingehängt werden kann. Es ist auch nicht möglich, beispielsweise einzelne Taschen mit den darin aufgenommenen Gegenständen aus einer entsprechenden Vorrichtung zu entnehmen, um sie z.B. in einer anderen Vorrichtung weiterzutransportieren oder kurzzeitig mit der Tasche zwischenzulagem.

Anstelle der an den Kanten von Materialbahnen vorgesehenen Schlaufen sind entsprechende Bahnen gelegentlich auch mit Ösen versehen worden, die in gleicher Weise auf Rundstäbe oder Rohre aufgeschoben werden wie die zuvor erwähnten Schlaufen. Auch dabei besteht derselbe Nachteil, daß die einzelne Bahn oder die einzelne Tasche nicht in einfacher und schneller Weise austauschbar ist, ohne nicht auch gleichzeitig auch andere Bahnen oder Taschen von der Vorrichtung zu lösen, zumindest dann, wenn die auszutauschende Bahn nicht am äußeren Rand einer Reihe von Taschen oder Bahnen angeordnet ist.

Ösen als Aufhängvorrichtung bedingen außerdem oft eine stark lokalisierte Belastung, wenn die Materialbahn stark gespannt wird oder entsprechend schwere Gegenstände in Taschen aufgenommen sind, die durch diese Materialbahnen gebildet werden.

Gegenüber diesem Stand der Technik liegt der vorliegenden Erfindung die Aufgabe zugrunde, eine Aufhängvorrichtung zu schaffen, die in einfacher und schneller Weise an einem Profilstab, der zum Aufhängen entsprechender Materialbahnen oder Taschen dient, befestigt und daron auch wieder gelöst werden kann.

In diesem Zusammenhang beschreibt die US 4,105,268 eine Aufhängvorrichtung, die einen Befestigungsabschnitt und einen Aufhängabschnitt aufweist, wobei der Aufhängabschnitt zwei im wesentlichen gegenüberliegende und einander zugewandte, jeweils eine Hakenhinterschneidung definierende, flexible Hakenteile aufweist, die eine Profilstange umgreifen. Eine solche Aufhängvorrichtung ist gemäß US 4,105,268 zum Aufhängen von Dokumenten (z.B. Zeichnungen, karten, Zeitungen und Magazine) geeignet.

Die Aufgabe der vorliegenden Erfindung wird dadurch gelöst, daß der Aufhängabschnitt der vorrichtung aus zwei im wesentlichen gegenüberliegenden und einander zugewandten, jeweils eine Hinterschneidung definierenden Hakenteilen besteht, wobei ein Hakenteil derart bewegbar ist, daß die durch das Hakenteil definierte Hinterschneidung zumindest teilweise freigegeben wird, so daß der Profilstab zwischen den Hakenteilen in die Hinterschneidungen eingeführt werden kann, wobei der Profilstab nach dem Zurückbewegen des bewegbaren Hakenteils in die dem anderen Hakenteil im wesentlichen gegenüberliegende Ausgangsstellung in den beiden Hinterschneidungen gesichert ist, und wobei die Aufhängvorrichtung dadurch gekennzeichnet ist, daß ein Hakenteil ein festes und relativ kurzes, stabiles Hakenteil ist, und das andere, bewegbare Hakenteil wesentlich länger ist.

Dies ermöglicht es, daß die einzelne Aufhängvorrichtung jederzeit und völlig unabhängig von anderen, an demselben Profilstab angebrachten Aufhängvorrichtungen zusätzlich an dem Profilstab angebracht oder von diesem gelöst werden kann, indem einfach das eine Hakenteil derart wegbewegt wird, z. B. in eine seit!iche weggebogene Stellung, so daß der Profilstab in den Bereich der Hinterschneidungen hinein- und hinausbewegt werden kann, wohingegen in der Stellung, in welcher der bewegbare Hakenteil dem anderen Hakenteil gegenüberliegt, der Profilstab in den Hinterschneidungen gesichert ist und nicht herausgenommen werden kann.

Wenn entsprechende Aufhängvorrichtungen an Materialbahnen angebracht sind, können dementsprechend die Materialbahnen und/oder daraus gebildete Taschen jederzeit an entsprechenden Profilstäben aufgehängt oder von diesen gelöst werden, ohne daß an demselben Profilstab davor oder dahinter angebrachte weitere Taschen oder Aufhängvorrichtungen gelöst werden müssen.

In der bevorzugten Ausführungsform der Erfindung wird zwischen den Hakenteilen und durch die von diesen gebildeten Hinterschneidungen eine T-förmige Aussparung zur Aufnahme eines entsprechenden T-Profiles gebildet.

Es versteht sich, daß die Hakenteile und die durch sie gebildeten Hinterschneidungen selbstverständlich auch irgendwelche anderen Profilformen definieren könnten, wobei ein T-Profil im vorliegenden Fall deshalb bevorzugt ist, weil es einerseits eine gute Stabilität des Profilstabes gewährt und weil außerdem ein gesicherter Eingriff mit zwei Hakenteilen bei einem T-Profil relativ einfach herstellbar ist.

Zweckmäßigerweise ist das mindestens eine, bewegliche Hakenteil elastisch wegbiegbar und kehrt ohne Einwirkung äußerer Kräfte in die geschlossene, dem anderen Hakenteil gegenüberliegende Stellung zurück, in der ein zwischen den Hakenteilen aufgenommenes T-Stück gesichert ist, also nicht von den beiden Hakenteilen gelöst werden kann.

In einer alternativen Ausführungsform ist das bewegliche Hakenteil mit Hilfe eines Federelementes in die geschlossene, dem anderen Hakenteil gegenüberliegende Stellung vorgespannt.

Mit Vorteil ist das bewegbare Hakenteil im wesentlichen in seitlicher Richtung, d. h. senkrecht zu der von den beiden gegenüberliegenden Hakenteilen gebildeten Ebene, bewegbar.

Für die konkrete Handhabung und Betätigung kann es zweckmäßig sein, wenn das bewegliche Hakenteil nach oben bzw. außen, das heißt auf der der Hinterschneidung abgewandten Seite, über das Niveau des festen Hakenteils hinausragend ausgebildet ist. Dies ermöglicht ein relativ einfaches Ergreifen bzw. Erfassen des beweglichen Hakenteils, um es bei Bedarf wegbiegen zu können. Insbesondere kann dann der über den Rand des anderen Hakenteils hinausragende Rand des wegbiegbaren Hakenteils auch seitlich gegen die Kante eines Profilstabes gedrückt werden, bis dieses Hakenteil weit genug seitlich weggebogen ist, um den Eintritt des Profilstabes in den Hinterschneidungsbereich zwischen den Hakenteilen zu ermöglichen, woraufhin das auf diese Art elastisch weggebogene Hakenteil elastisch zurückschnappt.

Der Befestigungsabschnitt der Aufhängvorrichtung kann eine, zwei oder auch mehrere Reihen von kleinen Löchern bzw. Nahtlöchem aufweisen, durch die Fäden hindurchgeführt werden können, die eine Naht für die Verbindung mit einer Materialbahn bilden. Alternativ kann dieser Befestigungsabschnitt aus einem hinreichend weichen, aber reißfesten bzw. zähen Material hergestellt sein, welches mit Hilfe einer lndustrienähmaschine genäht werden kann, so daß der Befestigungsabschnitt mit der darunter- oder daraufgelegten Materialbahn vernäht werden kann.

Alternativ oder in Kombination hierzu kann der Befestigungsabschnitt auch mit der Materialbahn verschweißt und/oder verklebt werden. Dies kann beispielsweise mit Vorteil mittels doppelseitigem Klebeband erfolgen.

Weiterhin kann der Befestigungsabschnitt noch Positioniermarken aufweisen, die zur Ausrichtung des Befestigungsabschnittes und der gesamten Aufhängvorrichtung entlang einer Kante einer Materialbahn dienen.

In der bevorzugten Ausführungsform der Erfindung ist außerdem das Material im Bereich mindestens eines der Hakenteile, und zwar vorzugsweise im Bereich eines feststehenden, nicht biegbaren Hakenteils, verstärkt.

Weiterhin ist eine Ausführungsform der Erfindung besonders bevorzugt, bei welcher die Aufhängvorrichtung aus zwei weitgehend spiegelbildlichen Hälften besteht, zwischen denen im montierten Zustand eine Kante einer flexiblen Bahn aufgenommen und befestigt ist. Bei einer solchen, nahezu spiegelbildlich ausgebildeten Aufhängvorrichtung ist es bevorzugt, wenn ein elastisch wegbiegbares Hakenteil nur an der einen Hälfte der im übrigen spiegelbildlich ausgebildeten Aufhängvorrichtung vorgesehen ist, während die andere Hälfte an dieser Stelle eine Aussparung aufweist. Hierdurch wird eine hinreichende Biegbarkeit und vorzugsweise eine elastische Biegbarkeit des mindestens einen Hakenteils gewährleistet.

Besonders bevorzugt ist eine Ausführungsform der Erfindung, bei welcher die beiden Hälften durch ein oder mehrere Biegescharniere einstückig miteinander verbunden sind. Mit Hilfe der Biegescharniere halten die beiden Hälften gut und weitgehend miteinander ausgerichtet zusammen und können mit der dazwischen angeordneten Materialbahn bzw. Kante einer Materialbahn einfach zusammengeklappt werden und halten dann die Materialbahn sandwichartig fest.

Dabei ist eine Ausführungsform der vorliegenden Erfindung besonders bevorzugt, bei welcher die beiden Hälften wechselseitig ineinandergreifende Aussparungen und Vorsprünge aufweisen, die eine genaue relative Ausrichtung der beiden Hälften bewirken, auch wenn dies weitgehend schon durch die entsprechenden Biegescharniere erreicht wird.

Eine entsprechende Materialbahn, welche als Teil einer Transport- oder Lagervorrichtung vorgesehen ist, bei welcher Aufnahmetaschen oder Aufnahmeabteile für zu transportierende oder zu lagernde Gegenstände mindestens teilweise durch entsprechende Materialbahnen gebildet werden, wird die der Erfindung zugrundeliegende Aufgabe dadurch gelöst, daß mindestens zwei Aufhängvorrichtungen der vorstehend beschriebenen Art an einer Kante dieser Materialbahn angeordnet bzw. angebracht sind.

Vorzugsweise sind dabei entlang einer ersten Kante zwei Aufhängvorrichtungen angebracht, während an einer der ersten Kante im wesentlichen gegenüberliegenden weiteren Kante der Materialbahn mindestens eine weitere Aufhängvorrichtung angebracht ist.

Dabei werden die entlang einer Kante angeordneten beiden Aufhängvorrichtungen zweckmäßiger weise so ausgerichtet, daß sie relativ zueinander um 180° gedreht sind, und zwar derart, daß die Abschnitte mit den wegbiegbaren Hakenteilen einander zugewandt sind, während festere, stabilere Hakenteile der Aufhängvorrichtung jeweils auf den voneinander abgewandten Abschnitten der beiden Aufhängvorrichtungen liegen.

Auf der gegenüberliegenden Kante der Materialbahn kann die eine Aufhängvorrichtung dann spiegelbildlich zu der entsprechenden Aufhängvorrichtung an der ersten Kante angeordnet werden.

Zweckmäßigerweise sind die Aufhängvorrichtungen mit der entsprechenden Materialbahn vernäht.

Zur genauen Ausrichtung bereits während der Befestigung einer Aufhängvorrichtung an einer Materialbahn sind in der bevorzugten Variante der Erfindung an einer Kante einer Materialbahn, die für das Anbringen entsprechender Aufhängvorrichtungen vorgesehen ist, Aussparungen vorgesehen, die in ihrer Form zu den Vorsprüngen der Aufhängvorrichtung bzw. des Befestigungsabschnittes der Aufhängvorrichtung passen, die gleichzeitig auch eine genaue Ausrichtung der beiden Hälften der bevorzugten Ausführungsform bilden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Seitenansicht einer erfindungsgemäßen Aufhängvorrichtung,
- Figur 2: eine Draufsicht auf die Aufhängvorrichtung nach Figur 1, bei welcher jedoch die bei- den Hälften auseinandergeklappt sind,
- Figur 3: veranschaulicht, wie die erfindungsgemäße Vorrichtung an einem T-förmigen Halte- profil angebracht werden kann,
- Figur 4: zeigt ausschnittsweise den oberen Bereich zweier Materialbahnen, die mit einer wei- teren Bahn eine U-förmige Tasche definieren, wobei an den oberen Kanten und dem Eckbereich der Materialbahnen jeweils eine der erfindungsgemäßen Aufhängvorrich- tungen angebracht ist,
- Figur 5: zeigt nochmals eine Seitenansicht entsprechender Taschen, bei welcher man er- kennt, daß an der oberen Kante der Materialbahnen jeweils eine Aufhängvorrichtung im Eckbereich angebracht ist und daß an der unteren Kante der Materialbahn eine weitere Aufhängvorrichtung, diesmal jedoch nur noch an einem Ende der Kante der Materialbahn angebracht ist,
- Figur 6: zeigt die Anbringung der erfindungsgemäßen Aufhängvorrichtung an der oberen Kante einer Materialbahn, wobei zusätzlich rechts in Figur 6 nochmals die obere Kante der Materialbahn ohne die Aufhängvorrichtung, jedoch mit zwei Positionier- aussparungen, dargestellt ist, und
- Figur 7: zeigt eine perspektivische Ansicht des oberen Bereichs einer Tasche.

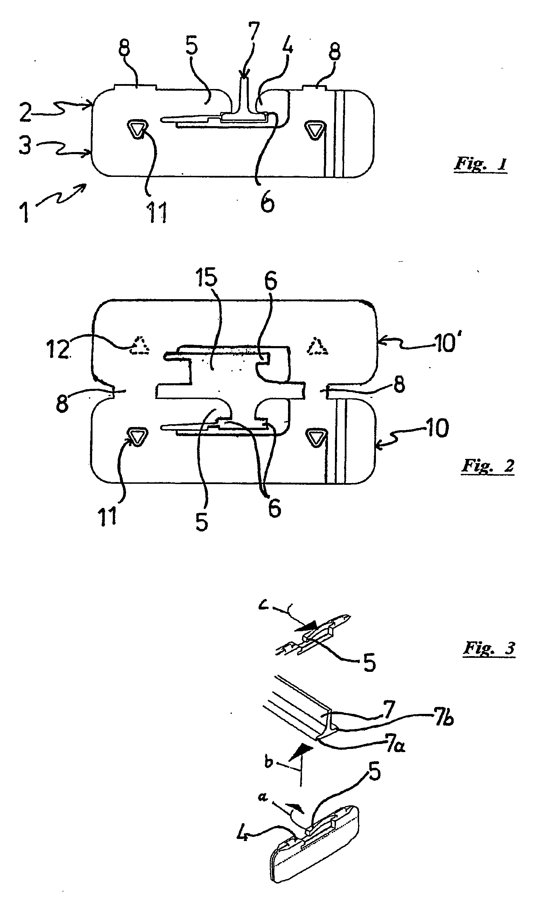

Man erkennt in Figur 1 in einer Seitenansicht eine aus Kunststoff bestehende Aufhängvorrichtung 1, deren obere Hälfte einen Aufhängabschnitt 2 und deren untere Hälfte einen Befestigungsabschnitt 3 definiert. Der Aufhängabschnitt 2 wird im wesentlichen definiert durch zwei Hakenteile 4, 5, die einander zugewandt sind und die jeweils eine Hinterschneidung definieren, so daß insgesamt zwischen den beiden Hakenteilen 4, 5 und mit der erwähnten Hinterschneidung eine Aussparung 6 definiert wird, die im wesentlichen einen T-Querschnitt hat. Wie man weiterhin erkennen kann, ist in der Darstellung der Figur 1 ein Profilstab 7 mit T-förmigem Profil aufgenommen und gesichert. Während das Hakenteil 4 ein festes und relativ kurzes, stabiles Hakenteil ist, ist das Hakenteil 5 wesentlich länger mit einer noch über die T-Aussparung definierenden hinausgehenden Hinterschneidung ausgebildet. Diese Ausgestaltung sorgt in Verbindung mit dem Material, aus welchem die Aufhängvorrichtung 1 gebildet ist, dafür, daß das Hakenteil 5 elastisch wegbiegbar ist, das heißt aus der Darstellung der Papierebene nach vom oder nach hinten herausbiegbar ist.

In Figur 2 ist dieselbe, in Figur 1 in einer Seitenansicht dargestellte Aufhängvorrichtung in einem aufgeklappten Zustand dargestellt. Man erkennt dabei, daß die Aufhängvorrichtung 1 aus zwei Hälften bestehen, die in etwa spiegelbildlich zueinander ausgebildet sind. Die beiden Hälften 10 bzw. 10' unterscheiden sich im wesentlichen nur in ihren jeweiligen Befestigungsabschnitten 2 und 2'. Während beide Befestigungsabschnitte 2 bzw. 2' ein relativ kurzes, festes Hakenteil 4 bzw. 4' aufweisen, fehlt bei dem Element 10' das lange, biegsame Hakenteil, welches bei dem Teil 10 mit 5 bezeichnet ist. Stattdessen ist bei dem Teil 10 eine entsprechende Aussparung 15 vorgesehen. Die beiden Hälften 10, 10' sind über zwei Biegescharniere 8 miteinander verbunden und werden so zusammengeklappt, daß sie insgesamt die in Figur 1 dargestellte Aufhängvorrichtung bilden.

Figur 3 veranschaulicht den Vorgang des Aufhängens bzw. Verbindens der Aufhängvorrichtung 1 mit einer im Profil T-förmigen Profilschiene 7. Der Vorgang ist in seinem Ablauf in Figur 3 von unten nach oben wiedergegeben.

Zunächst wird das bewegliche Hakenteil 5 entsprechend dem Pfeil a nach außen gebogen. Anschließend wird gemäß Pfeil b die Aufhängvorrichtung an die Profilschiene 7 herangebracht. Dies erfolgt so, daß der aus den Flanschteilen 7a, 7b bestehende untere Bereich der Schiene zwischen das feste Hakenteil 4 und das zurückgebogene Hakenteil 5 eingeschoben wird. Gleichzeitig oder anschließend wird der eine Flanschabschnitt 7a der Profilschiene 7 in die von dem festen Hakenteil 4 gebildete Hinterschneidung eingeführt. Wenn die Flanschteile 7a, 7b auf dem Grund der von den Hakenteilen 4 und 5 gebildeten Hinterschneidungen aufsitzt, läßt man das elastisch weggebogene Hakenteil 5 zurückschnappen, so daß es den Flanschabschnitt 7b der Profilschiene 7 übergreift. Dies entspricht dann der in Figur 1 in einer Seitenansicht dargestellten Situation.

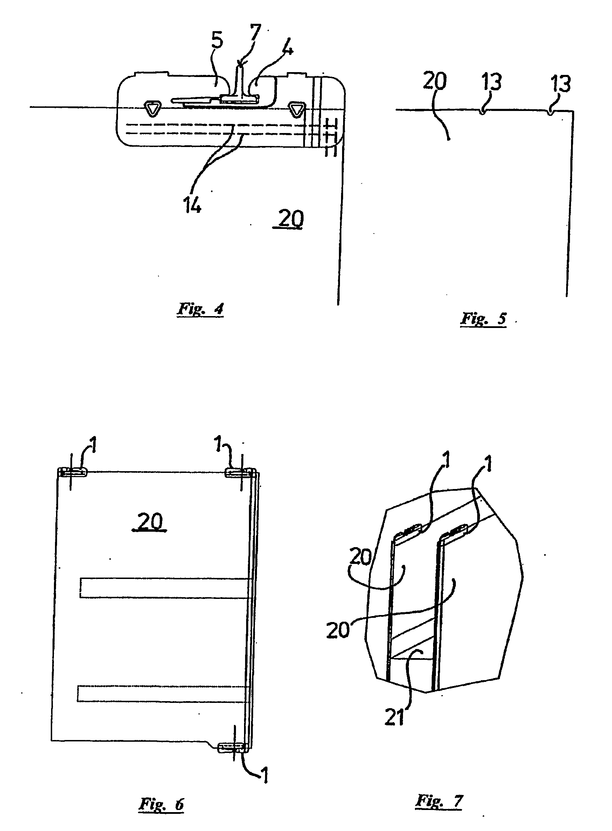

In Figur 4 ist nochmals die Aufhängvorrichtung 1 gemäß Figur 1 zu erkennen, wie sie an der oberen Kante einer flexiblen Bahn 20 befestigt ist.

Zur Befestigung der Aufhängvorrichtung 1 an der Kante der Bahn 20 wird die Aufhängvorrichtung in der in Figur 2 dargestellten Position an die Kante der Bahn 20 angesetzt, wobei die dreieckförmigen Aussparungen 11, die in Figur 1 und Figur 2 erkennbar sind, mit entsprechenden dreieckigen Aussparungen 13 an der Kante der flexiblen Bahn 20 angeordnet sind, ausgerichtet wird. An der zu der Hälfte 10 weitgehend spiegelbildlich ausgebildeten Hälfte 10' sind anstelle der dreieckigen Aussparungen 11 dreieckige Vorsprünge 12 vorgesehen, die in Figur 2 gestrichelt angedeutet sind und die ziemlich genau in die dreieckigen Aussparungen 11 hineinpassen, ohne daß es dabei auf eine sehr exakte Passung oder gar eine Preßpassung ankäme. Die Vorsprünge 12 und die Aussparungen 11 dienen im wesentlichen nur dazu, die beiden Hälften 10, 10' im wesentlichen so miteinander auszurichten, daß die beiden festen Hakenteile genau aufeinander zu liegen kommen und gemeinsam das feste Hakenteil 4 bilden.

Die Ausrichtung mit Hilfe der zusätzlichen Aussparungen 13 an der Kante der flexiblen Bahn 20 sorgt dafür, daß der untere Befestigungsabschnitt 3 zum einen genügend sicher an der flexiblen Bahn 20 befestigt werden kann und zum anderen auch dafür, daß die Aufhängvorrichtung 1 Insgesamt bezüglich sämtlicher Bahnen 20 immer dieselbe, wohldefinierte Position hat.

Nachdem die beiden Hälften 10, 10' zusammengeklappt sind, liegt die Bahn 20 in der in Figur 4 dargestellten Position sandwichartig zwischen den beiden Hälften 10, 10' der Aufhängvorrichtung 1. Danach wird die untere Hälfte der Hälften 10, 10', die den Befestigungsabschnitt 3 der Aufhängvorrichtung definiert, entlang zweier Nahtlinien 14 mit der flexiblen Bahn 20 vernäht. Am rechten Rand der Figur 4 sind außerdem noch zwei zusätzliche senkrechte Nahtabschnitte angedeutet, die wahlweise noch eine zusätzliche Verbindung definieren können.

Mindestens die untere Hälfte der Aufhängvorrichtung 1 ist aus einem hinreichend weichen und dünnen, wenn auch zähen und reißfesten Kunststoffmaterial hergestellt, daß die entsprechenden Nähte entlang der Linien 14 durch das Material der Aufhängvorrichtung hindurch hergestellt werden können, so daß die Aufhängvorrichtung 1 insgesamt mit der Kante der Bahn 20 fest vernäht ist. Wahlweise könnte der Befestigungsabschnitt 3, wenn das betreffende Material schlecht zu nähen sein sollte, auch vorgestanzte Löcher entlang der Nahtdurchtrittspunkte aufweisen, so daß dennoch ein Vernähen möglich wäre.

In Figur 6 erkennt man die Anordnung von insgesamt drei Aufhängvorrichtungen an einer Materialbahn 20, die im wesentlichen rechteckig ist und an der man noch zwei Zwischenböden 21 erkennt, die jeweils die Verbindung zu einer benachbarten Bahn 20 herstellt, so daß zwischen zwei benachbarten Bahnen 20 in Verbindung mit der Verbindungsbahn 21 eine U-förmige Tasche definiert wird, wobei im Falle der Figur 6 zwei Taschen übereinander zu erkennen sind und Figur 7 eine perspektivische Ansicht des oberen Bereiches einer solchen aus zwei Bahnen 20 und einer Verbindungsbahn 21 bestehenden Tasche zeigt.

Wie man erkennt, sind die Aufhängvorrichtungen 1 an der oberen Kante einer Bahn 20 spiegelbildlich zueinander und nahe der vertikalen Kanten angeordnet, so daß die kurzen, festen Hakenabschnitte 4 auf den voneinander weg weisenden Seiten der Aufhängvorrichtung 1 angeordnet sind. An der unteren Kante der Bahn 20 ist eine weitere Aufhängvorrichtung 1 spiegelbildlich zu der entsprechenden oben angeordneten Aufhängvorrichtung 1 vorgesehen.

Diese relative Ausrichtung und Anordnung der Aufhängvorrichtungen 1 entlang der Kanten rechtekkiger, flexibler Bahnen, aus einem Gewebe oder sonstigen flexiblen Material, wobei zwei benachbarte Bahnen gemeinsam mit einer Verbindungsbahn 21 U-förmige Taschen definieren, sorgt für eine insgesamt gleichmäßige Lastverteilung und insbesondere für eine überwiegende Lastaufnahme durch die kurzen, festen Hakenteile 4, wohingegen die nur an einer der Hälften ausgebildeten, beweglichen Hakenteile 5 nur jeweils auf den Innenseiten angeordnet sind und weniger Last aufnehmen müssen. Außerdem sind die Hakenteile 5, da sie wesentlich länger ausgebildet sind als die kurzen Hakenteile 4, leichter elastisch nach oben biegbar und werden auch aus diesem Grund weniger stark belastet.

## Patentansprüche

1. Aufhängvorrichtung (1) für Bahnen (20) aus flexiblem Material, bestehend aus einem Befestigungsabschnitt, welcher eine Befestigung der Aufhängvorrichtung an oder in der Nähe einer Kante eines ebenen Bahnmaterials ermöglicht, und mit einem Aufhängabschnnitt (2), der die Aufhängung an einem Profilstab (7) ermöglicht, wobei der Aufhängabschnitt aus zwei im wesentlichen gegenüberliegenden u d einander zugewandten, jeweils eine Hinterschneidung definierenden Hakenteilen (4,5) besteht, und wobei ein Hakenteil derart bewegbar ist, daß die durch das Hakenteil definierte Hinterschneidung zumindest teilweise freigegeben wird, so daß der Profilstab zwischen den Hakenteilen in die Hinterschneidungen eingeführt werden kann, wobei der Profilstab nach dem Zurückbewegen des bewegbaren Hakenteils in die dem anderen Hakenteil im wesentlichen gegenüberliegende Ausgangsstellung in den beiden Hinterschneidungen gesichert ist **dadurch gekennzeichnet, daß** ein Hakenteil ein festes und relativ kurzes, stabiles Hakenteil (4) ist, und das andere, bewegbare Hakenteil (5) wesentlich länger ist.

2. Aufhängvorrichtung nach Anspruch 1, **dadurch gekennzeichnet, daß** zwischen den Hakenteilen und durch die von diesen gebildeten Hinterschneidungen eine T-förmige Aussparung zur Aufnahme eines entsprechenden T-Profiles gebildet wird.

3. Aufhängvorrichtung nach Anspruch 1 oder 2, **dadurch gekennzeichnet, daß** das bewegbare Hakenteil elastisch wegbiegbar ist und im Ruhezustand seine geschlossene, dem anderen Hakenteil gegenüberliegende Ausgangsstellung einnimmt.

4. Aufhängvorrichtung nach einem der Ansprüche 1 bis 3, **dadurch gekennzeichnet, daß** das wegbiegbare Hakenteil auf der der Hinterschneidung abgewandten Seite über das Niveau des festen Hakenteiles hinausragend ausgebildet ist.

5. Aufhängvorrichtung nach einem der Ansprüche 1 bis 4, **dadurch gekennzeichnet, daß** der Befestigungsabschnitt entweder Nahtlöcher für die Herstellung einer Verbindungsnaht mit dem daran zu befestigenden Bahnmaterial aufweist oder aus einem nähfähigen Material besteht.

6. Aufhängvorrichtung nach einem der Ansprüche 1 bis 5, **dadurch gekennzeichnet, daß** der Befestigungsabschnitt Positioniermarken zur Ausrichtung entlang der Kante einer Bahn aufweist.

7. Aufhängvorrichtung nach einem der Ansprüche 1 bis 6, **dadurch gekennzeichnet, daß** die Wandstärke des Aufhängabschnittes im Bereich mindestens eines der Hakenteile, und zwar vorzugsweise im Bereich des feststehenden Hakenteiles, verstärkt ist.

8. Aufhängvorrichtung nach einem der Ansprüche 1 bis 7, **dadurch gekennzeichnet, daß** sie aus zwei vorzugsweise weitgehend spiegelbildlichen Hälften besteht, zwischen denen im montierten Zustand die Kante eines flexiblen Bahnmaterials aufgenommen ist.

9. Aufhängvorrichtung nach Anspruch 8, **dadurch gekennzeichnet, daß** das wegbiegbare Hakenteil nur an einer der im übrigen spiegelbildlichen Hälften vorgesehen ist, während die andere Hälfte in diesem Bereich eine Lücke aufweist.

10. Aufhängvorrichtung nach einem der Ansprüche 8 oder 9, **dadurch gekennzeichnet, daß** die beiden Hälften durch ein oder mehrere Biegescharniere einstückig miteinander verbunden sind.

11. Aufhängvorrichtung nach einem der Ansprüche 8 bis 10, **dadurch gekennzeichnet, daß** die beiden Hälften wechselseitig ineinandergreifende Aussparungen und Vorsprünge haben, die eine genaue relative Ausrichtung der beiden Hälften im montierten Zustand bewirken.

12. Materialbahn als Teil einer Transport- oder Lagervorrichtung, bei welcher Aufnahmetaschen oder Aufnahmeabteile für zu transportierende oder zu lagernde Gegenstände durch entsprechende Materialbahnen gebildet werden, **dadurch gekennzeichnet, daß** mindestens zwei Aufhängvorrichtungen nach einem der Ansprüche 1 bis 11 an einer ersten Kante der Materialbahn angebracht sind.

13. Materialbahn nach Anspruch 12, **dadurch gekennzeichnet, daß** mindestens eine weitere Aufhängvorrichtung nach einem der Ansprüche 1 bis 11 an einer der ersten Kante gegenüberliegenden Kante der Materialbahn angebracht ist.

14. Materialbahn nach einem der Ansprüche 12 oder 13, **dadurch gekennzeichnet, daß** die Bahn entlang mindestens einer ihrer Kanten Aussparungen zur passenden Aufnahme von Vorsprüngen einer Aufhängvorrichtung nach Anspruch 11 hat.

## Claims

1. A suspension device (1) for webs (20) of flexible material, comprising a fixing portion which permits fixing of the suspension device to or in the proximity of an edge of a flat web material, and a suspension portion (2) which permits suspension on a profiled bar (7), wherein the suspension portion comprises two substantially oppositely disposed and mutually facing hook portions (4, 5) defining a respective undercut configuration, and wherein a hook portion is movable in such a way that the undercut configuration defined by the hook portion is at least partially opened so that the profiled bar can be introduced between the hook portions into the undercut configurations, wherein after the movable hook portion is moved back into the initial position of being disposed substantially opposite to the other hook portion the profiled bar is secured in the two undercut configurations, **characterised in that** one hook portion is a fixed and relatively short, stable hook portion (4) and the other, movable hook portion (5) is substantially longer.

2. A suspension device according to claim 1 **characterised in that** formed between the hook portions and by the undercut configurations formed thereby is a T-shaped recess for receiving a corresponding T-profile.

3. A suspension device according to claim 1 or claim 2 **characterised in that** the movable hook portion can be elastically bent away and in the rest condition assumes a closed initial position in opposite relationship to the other hook portion.

4. A suspension device according to one of claims 1 to 3 **characterised in that** the hook portion, which can be bent away, is adapted to project above the level of the fixed hook portion on the side, which is remote from the undercut configuration.

5. A suspension device according to one of claims 1 to 4 **characterised in that** the fixing portion has either sewing holes for making a connecting seam to the web of material to be fixed thereto or it comprises a sewable material.

6. A suspension device according to one of claims 1 to 5 **characterised in that** the fixing portion has positioning marks for alignment along the edge of a web.

7. A suspension device according to one of claims 1 to 6 **characterised in that** the wall thickness of the suspension portion is reinforced in the region of at least one of the hook portions and more specifically preferably in the region of the stationary hook portion.

8. A suspension device according to one of claims 1 to 7 **characterised in that** it comprises two preferably substantially mirror-image halves, between which in the assembled condition the edge of a flexible web material is accommodated.

9. A suspension device according to claim 8 **characterised in that** the hook portion which can be bent away is provided only at one of the halves which in other respects are of mirror-image configuration while the other half has **in that** region a gap.

10. A suspension device according to one of claims 8 and 9 **characterised in that** the two halves are integrally connected by one or more bending hinges.

11. A suspension device according to one of claims 8 to 10 **characterised in that** the two halves have alternately interengaging openings and projections, which provide for precise relative alignment of the two halves in the assembled condition.

12. A web of material as part of a transport or storage apparatus, in which receiving pockets or receiving compartments for articles to be transported or stored are formed by corresponding webs of material, **characterised in that** at least two suspension devices according to one of claims 1 to 11 are mounted to a first edge of the web of material.

13. A web of material according to claim 12 **characterised in that** at least one further suspension device according to one of claims 1 to 11 is mounted to an edge of the web of material, which is in opposite relationship to the first edge.

14. A web of material according to one of claims 12 and 13 **characterised in that** along at least one of its edges the web has openings for fittingly receiving projections of a suspension device according to claim 11.

## Revendications

1. Dispositif (1) de suspension pour bandes (20) de matériau souple, comprenant un segment de fixation permettant de fixer le dispositif de suspension sur un bord ou à proximité d'un bord d'un matériau de bande plan, ainsi qu'un segment (2) de suspension permettant la suspension à une barre profilée (7), le segment de suspension étant constitué de deux parties crochets (4, 5) orientées l'une vers l'autre et sensiblement en face l'une de l'autre, qui définissent respectivement une contre-dépouille, une partie crochet étant mobile de façon à libérer au moins partiellement la contre-dépouille définie par la partie crochet, de sorte que la barre profilée puisse être introduite dans les contre-dépouilles entre les parties crochets, la barre profilée étant solidement fixée dans les deux contre-dépouilles après la remise en place de la partie crochet mobile dans sa position initiale sensiblement en face de l'autre partie crochet, **caractérisé en ce que** la partie crochet (4), stable, est fixe et relativement stable, et l'autre partie crochet (5), mobile, est sensiblement plus longue.

2. Dispositif de suspension selon la revendication 1, **caractérisé en ce qu'**un évidement en forme de T est formé entre les parties crochets et par les contre-dépouilles formées par ces dernières, afin de loger un profilé en T correspondant.

3. Dispositif de suspension selon la revendication 1 ou 2, **caractérisé en ce que** la partie crochet mobile peut être repliée élastiquement et prend sa position initiale fermée en face de l'autre partie crochet, à l'état de repos.

4. Dispositif de suspension selon l'une quelconque des revendications 1 à 3, **caractérisé en ce que** la partie crochet repliable est conçue de manière à dépasser du niveau de la partie crochet fixe, sur le côté opposé à la contre-dépouille.

5. Dispositif de suspension selon l'une quelconque des revendications 1 à 4, **caractérisé en ce que** le segment de fixation présente des trous de couture pour la réalisation d'une couture d'assemblage avec le matériau de bande à fixer à ce dernier ou est constitué d'un matériau pouvant être cousu.

6. Dispositif de suspension selon l'une quelconque des revendications 1 à 5, **caractérisé en ce que** le segment de fixation présente des repères de positionnement pour l'alignement le long du bord d'une bande.

7. Dispositif de suspension selon l'une quelconque des revendications 1 à 6, **caractérisé en ce que** l'épaisseur de paroi du segment de suspension est renforcée dans la zone d'au moins une des parties crochets, de préférence dans la zone de la partie crochet fixe.

8. Dispositif de suspension selon l'une quelconque des revendications 1 à 7, **caractérisé en ce qu'**il est constitué de deux moitiés de préférence largement symétriques, entre lesquelles est logé, à l'état monté, le bord d'un matériau de bande souple.

9. Dispositif de suspension selon la revendication 8, **caractérisé en ce que** la partie crochet repliable est agencée uniquement sur une des moitiés du reste symétriques, tandis que l'autre moitié présente un vide dans cette zone.

10. Dispositif de suspension selon l'une des revendications 8 ou 9, **caractérisé en ce que** les deux moitiés sont reliées d'une seule pièce l'une à l'autre par une ou plusieurs charnières de flexion.

11. Dispositif de suspension selon l'une quelconque des revendications 8 à 10, **caractérisé en ce que** les deux moitiés présentent des évidements et saillies s'emboîtant réciproquement les uns dans les autres, entraînant un alignement relatif précis des deux moitiés à l'état monté.

12. Bande de matériau en tant que partie d'un dispositif de transport ou de stockage, dans lequel des sacs de logement ou des compartiments de logement pour des objets à transporter ou à stocker sont formés par des bandes de matériau correspondantes, **caractérisée en ce qu'**au moins deux dispositifs de suspension selon l'une quelconque des revendications 1 à 11 sont mis en place sur un premier bord de la bande de matériau.

13. Bande de matériau selon la revendication 12, **caractérisée en ce qu'**au moins un autre dispositif de suspension selon l'une quelconque des revendications 1 à 11 est mis en place sur un bord de la bande de matériau en face du premier bord.

14. Bande de matériau selon l'une des revendications 12 ou 13, **caractérisée en ce que** la bande présente des évidements le long d'au moins un de ses bords ajustés pour loger les saillies d'un dispositif de suspension selon la revendication 11.
